# EUROPEAN PATENT APPLICATION

(11) **EP 2 708 276 A1**
(43) Date of publication of application: **19.03.2014**
(21) Application number: 12184285.0
(22) Date of filing: 13.09.2012
(51) Int. Cl.: B01D 61/36, B01D 53/14

(54) **Improved membrane gas desorption**

(71) Applicant: Nederlandse Organisatie voor Toegepast -Natuurwetenschappelijk Onderzoek TNO, 2628 VK Delft (NL)
(72) Inventor: Goetheer, Earl Lawrence Vincent, 2628 VK Delft (NL); van de Runstraat, Annemieke, 2628 VK Delft (NL)
(74) Representative: Jansen, Cornelis Marinus

(57) **Abstract**

The invention is directed to a membrane gas desorption process, a gas separation process and a membrane gas desorption module.

A more energy efficient and compact membrane gas desorption process can be obtained by integrating membrane gas desorption and heat exchange.

The process comprises: (a) providing rich absorption liquid, rich in said gas, (b) heating said rich absorption liquid, (c) contacting heated absorption liquid with a membrane, thereby desorbing at least part of said gas and evaporating part of said absorption liquid, providing vapour, passing desorbed gas and vapour through said membrane from a retentate side to a permeate side of said membrane, providing lean absorption liquid, (d) condensing at least part of said vapour on one or more condensers in heat exchange with the rich absorption liquid, providing a condensate, and using at least part of the heat of condensation for heating said rich absorption liquid in (b).

## Description

The invention is directed to a membrane gas desorption process, a gas separation process and a membrane gas desorption module.

Membrane gas desorption can be used for desorption of gas(es) absorbed in an absorption liquid as an improved desorption process compared to a conventional stripper. In a typical absorption based gas separation process, one or more gases are absorbed from a gas mixture into a selective absorption liquid to create absorption liquid with relatively high loading of absorbed gas(es) (rich absorption liquid). For the separation of acid gases such as CO₂ and H₂S from gas mixtures typical absorption liquids are aqueous amine solutions. Then, the rich absorption liquid can be regenerated by desorption of the gas(es) to provide absorption liquid with relatively low loading of these gas(es) (lean absorption liquid). The whole process is desirably carried out in an energy efficient way. Since regeneration of the absorption liquid usually takes up a major part of the energy use of such a gas separation process, energy efficiency of the regeneration is a key parameter.

In a conventional absorption liquid regeneration process a stripper is used. In this stripper the temperature at the bottom is high, to generate steam and promote desorption of absorbed gas. The heating of the absorption liquid as well as evaporation and recondensation of water (creation of steam) all contribute to the energy requirement of the regeneration. Thus, a high temperature approach is created for heat exchange between lean and rich absorption liquid. Moreover, in a high pressure process, the rich absorption liquid is typically expanded to lower pressure to promote desorption. The lean absorption liquid therefore has to be recompressed to a pressure suitable for the absorption process. The high temperature and the recompression reduce the energy efficiency of a conventional stripper process.

The recompression step can be (partially) avoided using a membrane gas desorption process as described in WO-A-2006/004 400. In a membrane gas desorption process, a preferably high-flux, non-selective membrane is used through which gas passes from the retentate side to the permeate side to desorb from the rich absorption liquid.

Specific membrane gas desorption processes, such as described in WO-A-2006/004 400, allow for desorption at high absorption liquid pressure, thereby avoiding the need for recompression of the absorption liquid. However, the membrane does not change the vapour-liquid equilibrium relative to a conventional stripper. Desorption is thus at least in part induced by heating the absorption liquid. This means that typically the temperature in the process is similar to the temperature at the bottom of a conventional stripper. This high temperature causes increased evaporation of the absorption liquid and higher heating / boiler costs.

One approach for improving the energy efficiency of membrane gas desorption processes is the development of membranes capable of suppressing absorption liquid evaporation. Available membranes do so however only to a limited extend. This approach is also limited by the increasing partial vapour pressure of the desorbed gas, causing a higher loading of the regenerated absorption liquid.

Another approach is heat exchange between relatively cold rich absorption liquid and relatively warm lean absorption liquid. Such heat exchange is not integrated in the membrane gas desorption process. This means that one needs to heat the complete flow of absorption liquid to the required desorption temperature and can exchange only part of the heat needed. Additional heating and cooling is still necessary. Moreover, one needs separate pieces of equipment to perform desorption and heat exchange. This has the disadvantages of lower energy-efficiency and less compact equipment.

Therefore, a need exists for a more energy-efficient and compact membrane gas desorption process.

WO-A-00/72947 discloses a membrane distillation method (Memstill®), in particular for desalination of salt water, wherein water evaporated through the membrane is allowed to condense on a wall of a salt water supply channel, thus transferring heat to warm the salt water and using heat of condensation.

Objective of the present invention is to provide a membrane gas desorption process avoiding or mitigating one or more of the mentioned disadvantages. A specific objective is increased energy efficiency.

The inventors surprisingly found that one or more of the above mentioned objectives can at least in part be met by integrating membrane gas desorption and heat exchange.

The term "permeate" as used herein indicates the stream containing the permeants (compounds passed through the membrane), including vapour and desorbed gas(es) passed through the membrane and condensate of vapour.

The term "retentate" as used herein indicates absorption liquid and any compounds comprised therein that do not pass through the membrane during the process.

The term "retentate side" of a membrane indicates a side of a membrane exposed to the retentate during the process; "permeate side" indicates the other side of a membrane. The permeate emerges from the permeate side.

The term "vapour" as used herein refers to evaporated absorption liquid.. The term "vapour" includes evaporated components or parts of absorption liquid, such as evaporated water from an aqueous solution, such as an aqueous amine solution, as absorption liquid.

Rich absorption liquid indicates absorption liquid relatively rich in absorbed gas(es) as provided in the feed stream. Lean absorption liquid indicates absorption liquid, relatively lean in absorbed gas(es) compared to the rich absorption liquid. The term rich and lean are relative to each other and do not imply any absolute limit on gas loading of absorption liquid.

The term "substantially parallel" as used herein is meant to include essentially parallel, such as at an angle of 170° to 190° to each other, such as 175° to 185°, including parallel to each other (*i*.*e*. about 180°).

In a first aspect, the invention relates to a membrane gas desorption process, for desorption of a gas absorbed in an absorption liquid, comprising
(a) providing rich absorption liquid, rich in said gas,
(b) heating said rich absorption liquid,
(c) contacting heated absorption liquid with a membrane, thereby desorbing at least part of said gas and evaporating part of said absorption liquid, providing vapour, passing desorbed gas and vapour through said membrane from a retentate side to a permeate side of said membrane, providing lean absorption liquid,
(d) condensing at least part of said vapour on one or more condensers in heat exchange with the rich absorption liquid, providing a condensate, and using at least part of the heat of condensation for heating said rich absorption liquid in (b).

This process is a "membrane integrated regeneration to heat exchange process" (MIRTHE process); wherein heat is exchanged at the permeate side of the membrane and vapour is transferred from the retentate to the permeate side of the membrane.

The gas can comprise any gas that can be absorbed in a liquid. Suitably, the gas comprises an acid gas such as CO₂ and/or H₂S. Multiple gasses can be simultaneously desorbed in the process.

The process is preferably a continuous process. Each step can be carried out as a plurality of steps; the process can comprise a plurality of heating steps, of steps wherein the heated absorption liquid is contacted with a membrane, of evaporation steps and of condensation steps. The absorption liquid can be contacted with a plurality of membranes.

The absorption liquid can be any liquid wherein the gas can be absorbed and also a mixture of liquids. Preferably, the absorption liquid is aqueous. An aqueous absorption liquid may comprise one or more compounds to increase the absorption capacity for the gas(es), such as carbonate salts, phosphate salts, amino acid salts and amines, preferably amines. These compounds, in particular amines, are suitably used for acid absorbed gasses.

The absorption liquid is readily selected by the skilled person, as described in WO-A-2012/096576.

Many absorption liquids can be considered. Suitable absorption liquids include chemical solvents and physical solvents. For chemical solvents, absorption primarily depends on a chemical reaction between the solvent and the gaseous component. For physical solvents, absorption primarily depends on the physical solubility of the gaseous component. In general, the regeneration heat for physical solvents is much lower than for chemical solvents. In addition, physical solvents are often less corrosive. However, a lowering of the pressure is necessary to obtain desorption for physical solvents. The absorption liquid choice can be optimised based on temperature and pressure, depending on the situation, in particular the gases involved and the type of desorption membrane used.

Some examples of physical solvent absorption liquids include dimethylether of tetraethylene glycol, N-methyl-2-pyrrolidone, propylene carbonate, methanol and mixtures thereof.

The rich absorption liquid is suitably absorption liquid coming from an absorption process. The rich absorption liquid, as obtained from such an absorption process is typically at relatively low temperature. Often, the rich absorption liquid is also at relatively high pressure. Suitably, the rich absorption liquid is at a pressure of 1 bar or more, such as 1-200 bar, suitably 10-100 bar, suitably 50-100 bar. Absorption liquids at such pressures can be obtained from *e.g.* natural gas treatment and synthesis gas treatment. The rich absorption liquid can also be at relatively low pressure, such as 1-5 bar, preferably 1-2 bar. Absorption liquids at such pressures can be obtained from *e.g.* flue gas treatment.

Suitably, the rich absorption liquid is at -50 to 300 °C, suitably -30 to 150 °C, suitably -20 to 90 °C, suitably 0-90 °C.

Suitably, the loading of the rich absorption liquid with absorbed gas is 0.3-0.9 mol gas per mol active absorption liquid component. If the loading is too low, high absorption liquid circulation rates are necessary. Too high circulation of the absorption liquid will have a negative effect on process economics.

Rich absorption liquid is heated to obtain heated absorption liquid. Heating of the rich absorption liquid causes the equilibrium to shift to desorption of at least part of the gas from the absorption liquid.

In the process, at least part of the gas passes through the membrane from the retentate side to the permeate side. Heated absorption liquid thereby becomes lean absorption liquid.

Suitably, the retentate side of the membrane is at a pressure of 1-200 bar, preferably 1-100 bar, more preferably 1.5-40 bar. Recompression of the absorption liquid can be at least in part avoided as the process as the process operates with a relatively high transmembrane pressure, allowing the desorption liquid to remain at a relatively high pressure..

The retentate side of the membrane can also be at relatively low pressure, such as 1-5 bar, preferably 1-2 bar.

The temperature of the desorption step is preferably in the range 10-500 °C, preferably 30-300 °C, more preferably 50-150 °C.

Preferably, the absorbed gas loading is reduced by 10-100 %, more preferably 50 to 100 %, most preferably 75 to 100 %, wherein the absorbed gas loading is the absorbed gas loading in mol absorbed gas per kg absorption liquid or the effective absorbed gas loading in mol absorbed gas per mol active absorption liquid component, or both. Preferably, the absorbed gas loading is reduced by these amounts as the absorbed gas desorbs and passes through the membrane.

Preferably, the process comprises a heating step causing desorption of amounts of absorbed gas corresponding to these absorbed gas loading reductions.

At least part of the absorption liquid is evaporated, providing vapour. Preferably, 0.05-15 wt.% of the absorption liquid evaporates, more preferably 0.1-10 wt.%.

The process comprises passing the gas through the membrane from the retentate side to the permeate side of the membrane, providing desorbed gas at the permeate side and lean absorption liquid at the retentate side. The desorbed gas is obtained as a gas product stream at the permeate side.

The membrane functions as a barrier for the absorption liquid. Preferably, the membrane also acts as a barrier for compounds present in the absorption liquid, other than the gas. The purity of the gas product stream is then even higher.

The membrane suitably has a thickness of 10-500 µm, such as 15-300 µm or 50-200 µm.

A porous support for the membrane for improving mechanical stability, such as an organic polymer or ceramic support can be applied.

The process can be operated at relatively high process pressures such as 5-100 bar. For processes at relatively high process pressures, the pressure difference between the retentate side and the permeate side of the membrane (trans membrane pressure) suitably is 1 bar or more, preferably 5-150 bar, more preferably 10-50 bar, wherein the pressure at the permeate side of the membrane is lower than the pressure at the retentate side of the membrane.

The process can also be operated at relatively low process pressures, such as 1-5 bar. For processes at relatively low process pressures, the trans membrane pressure is suitably 0.01 bar or more, preferably 0.05-1 bar, preferably 0.5 bar or less, more preferably 0.3 bar or less.

The membrane is preferably highly permeable for the desorbed gas.

Preferably, the membrane has a permeability for the desorbed gas of 200 l/hr/m²/bar or more, more preferably 200-40000 l/hr/m²/bar, even more preferably 1000-5000 l/hr/m²/bar, with volume permeated desorbed gas; normalised to standard temperature and pressure.

The membrane stays stable and retains its high flux at the desorption temperature, in contact with the absorption liquid, for a sufficient time. Furthermore, the membrane preferably shows good barrier properties towards the absorption liquid, even when a significant trans membrane pressure is applied. Accordingly, the pressure of the absorption liquid at the retentate side of the membrane will hardly (or not) be reduced while the absorbed gas is desorbed, apart from the pressure drop from flow resistance and gas desorption.

For aqueous absorption liquids, the membrane is preferably hydrophobic. Suitable membranes include hydrophobic high permeable glassy polymer membranes. Preferably, the membrane comprises membrane materials such as poly(1-trimethylsilyl-1-propyne), poly(4-methyl-2-pentyne), poly(1-trimethylgermyl-1-propyne), poly(vinyltrimethylsilane), and poly(tetrafluoroethylene). The use of some of these membranes in membrane gas desorption has been described in WO-A-2006/004400. In addition, suitable inorganic membranes can be applied.

In an embodiment a spacer material is applied in the membrane desorption unit. Preferably, the spacer material is compatible with the absorption liquid it is emerged in. Spacers are mesh-type materials in between membrane sheets and the membrane module walls. These spacers are there to keep the sheets apart and to distribute the fluid across the membrane. In case of an aqueous absorption liquid, it is recommended to use a hydrophilic spacer material. In case of a non-aqueous absorption liquid hydrophobic spacers are recommended.

The process comprises condensing at least part of the vapour and using at least part of the heat of condensation for heating the rich absorption liquid. In this way, the heat of condensation, also known as heat of evaporation, or latent heat, of the vapour is at least partly used for heating the rich absorption liquid. In this way, internal heat is recovered and the energy efficiency of the process is increased. Preferably, perceptible heat of vapour and/or desorbed gas is in addition used to heat rich absorption liquid.

The heating element duty for heating the rich absorption liquid can advantageously be reduced by up to 40 %, also by less, such as by up to 10 %, up to 20 %, up to 30 %; or even by more than 40 %.

The process further advantageously allows for a compact absorption-desorption unit, as heat exchange is integrated.

Step (c) comprises simultaneous desorption of absorbed gas, evaporation of absorption liquid and membrane transport of gas and vapour.

The heat exchange in step (d) is integrated in the process. The heat exchange is with the rich absorption liquid provided in step (a). The heat exchange is, with respect to the flow of the absorption liquid, upstream the membrane and upstream step (c). In this way, the heat exchange contributes to the heating in step (b). Step (b) comprises heating by the heat exchange of step (d). In addition, step (b) comprises some external heating. Step (b) occurs at least in part upstream the membrane and at least in part before step (c).

Because of the heating in step (b), absorption liquid at the retentate side of the membrane evaporates, resulting in vapour. The vapour passes through the membrane from retentate side to permeate side.

The process comprises condensing at least part of the vapour on one or more condensers. The condensers are different from the membrane. The condensers are in heat exchange with the rich absorption liquid provided in step (a) and heated in step (b). The vapour suitable condenses at least in part on a condensing surface of the condensers. The condensing surface is preferably non-porous. The condensers are preferably highly heat conductive, such as 10 W/mK or more, preferably 40 W/mK or more, more preferably 200 W/mK or more, such as up to 500 W/mK. The condensers are preferably resistant against desorbed gas and vapour, in particular the condensing surface. The condensing surface is usually part of a wall between a channel for the rich absorption liquid and a channel at the permeate side of the membrane.

Preferably, the condenser is mechanically strong and has a good chemical resistance and high heat conductance. Therefore, the condenser is preferably a thin metal or alloy plate. Suitable materials include different kinds of steel, or commercial alloys such as Hastelloy® or Kanthal®.

The vapour passed through the membrane is at least partly condensed on the one or more condensers, preferably 50 wt.% or more, more preferably 70 wt.% or more, more preferably 90 wt.% or more is condensed on the one or more condensers, based on total weight of vapour passed through the membrane. A condensate is provided by the condensation. The condensate is suitably a film on the condensing surface. The condensate can also form droplets. The condensing surface preferably has a profiled surface to coalesce the vapour into droplets and to control the flow of these droplets to the outlet. The condensate suitably flows in the direction of gravity. The process provides a condensate product stream. In case of an aqueous absorption liquid, a condensate product stream of purified water can advantageously be obtained.

The heat exchanging streams in the process are preferably in counter-current flow, for optimal heat exchange.

The heated absorption liquid at the retentate side of the membrane and the desorbed gas at the permeate side of the membrane are preferably in counter-current flow. This provides good gas desorption efficiency and good gas transport through the membrane. The same applies to the vapour. Therefore, the heated absorption liquid at the retentate side of the membrane and the vapour at the permeate side of the membrane are preferably in counter-current flow.

Preferably, the condensate and the rich absorption liquid are in counter-current flow for optimal heat exchange and use of the perceptible heat of the condensate.

Preferably, the absorption liquid at the retentate side of the membrane in step (c) and the rich absorption liquid in at least part of step (b) are in counter-current flow, for optimal use of the heat of condensation.

These preferences can be combined if the condensate is in opposite flow to the desorbed gas and vapour at the permeate side of the membrane.

Step (d) comprises condensing vapour on one or more condensers. A first condenser is preferably at the permeate side of the membrane. In some cases, not all vapour will condense on the first condenser and a stream comprising desorbed gas and vapour is obtained at the permeate side of the membrane at the outlet. This is more likely if the outlet at the permeate side for the stream comprising desorbed gas and vapour is located near a part, or end, of the membrane where the temperature of the heated absorption liquid at the retentate side is the highest, because then more vapour will pass through the membrane close to that outlet. Vapour passing through the membrane close to said outlet is less likely to condense on the one or more condensers.

Step (d) therefore preferably comprises condensing on two or more condensers including a first condenser at the permeate side of the membrane and a second condenser not at the permeate side of the membrane. The second condenser can be an extension of the first condenser. The second condenser can also be different from the first condenser. The second condenser is preferably in a channel or channel part not exposed to the membrane. Such channel or channel part does not comprise the membrane as wall. The second condenser is preferably located downstream the membrane for the vapour. The second condenser is also in heat exchange with the rich absorption liquid.

The second condenser is preferably arranged such, that vapour flows over the second condenser in counter-current flow with the rich absorption liquid.

Preferably, the process comprises adding at least part of the condensate to the lean absorption liquid. Thereby, the composition of the lean absorption liquid can be adjusted and/or controlled. In this way, deviations in the composition of the absorption liquid can be mitigated.

The process can be a part of a gas separation process. The invention also relates to a gas separation process for separating gasses in a mixed gas stream comprising selectively absorbing a gas from said mixed gas stream in an absorption liquid, providing rich absorption liquid; and desorbing said gas at least in part from said rich absorption liquid by a desorption process according to this invention.

Preferably, said gas comprises CO₂ and/or H₂S. One or more gasses may be separated from the mixed gas stream and selectively absorbed.

Suitable gas separation processes include treatment of natural gas, treatment of biogas; (CO₂ and/or H₂S) / H₂ separation and CO₂ and/or H₂S separation from a gas stream such as flue gas. Flue gas cleaning and biogas upgrading are performed suitably at low pressure and natural gas sweetening suitably at high pressure. In this process, lean absorption liquid stream is preferably used again in the absorption step, preferably 90 wt.% of the lean absorption liquid stream, more preferably all. Preferably, at least part of the condensate is added to the lean absorption liquid stream. This is in particular advantageous with aqueous absorption liquid and in combination with a gas separation process. The mixed gas stream for the absorption step typically comprises water. Such water is often at least partly absorbed, increasing the water content of the absorption liquid. Adding at least part of the condensate to the lean absorption liquid allows for controlled reduction of the water content of the absorption liquid, in particular if water is first evaporated by an excess amount.

Preferably, a steady state is reached in a process wherein lean absorption liquid stream is used again in the absorption step. Preferably, the amount of gas desorbed is approximately 100 wt.% of the gas absorbed in the previous absorption step, such as 95-105 wt.%, preferably 99-101 wt.%.

The invention also relates to a membrane gas desorption module, preferably for a process as described, comprising
- a first channel for a rich absorption liquid, rich in absorbed gas,
- a heating element for heating said rich absorption liquid, providing heated absorption liquid,
- a second channel for the heated absorption liquid,
- a membrane between the second channel and a third channel, said membrane capable of passing through vapour and desorbed gas,
- a condenser in the third channel in heat exchange with the first channel, for condensation of vapour.

The third channel is suitably between the first and second channel. The first, second and third channel are preferably substantially parallel to each other, such as at an angle of 170° to 190° to each other. The membrane and the condenser are preferably at least partly opposed to each other, such as stacked. The condenser in the third channel preferably forms at least part of the wall between the third channel and the first channel. The third channel is for vapour and desorbed gas passed through the membrane.

Preferably, the module is adapted for counter-current flow of the heated absorption liquid in the second channel and desorbed gas in the third channel at both sides of the membrane. This allows for good membrane transport of desorbed gas.

The third channel has an outlet, where a desorbed gas stream is obtained comprising desorbed gas and vapour. The module therefore preferably comprises a fourth channel for gas and vapour and a condenser in the fourth channel in heat exchange with the first channel, wherein the condenser is for condensation of vapour. This allows for use of the heat of condensation of vapour comprised in the desorbed gas stream.

The inlet of the fourth channel is connected to the outlet of the third channel. The fourth channel is for the desorbed gas stream obtained in the third channel. The fourth channel is preferably adapted for counter-current flow to the rich absorption liquid in the first channel. The condenser is or comprises preferably at least part of the wall between the fourth channel and the first channel.

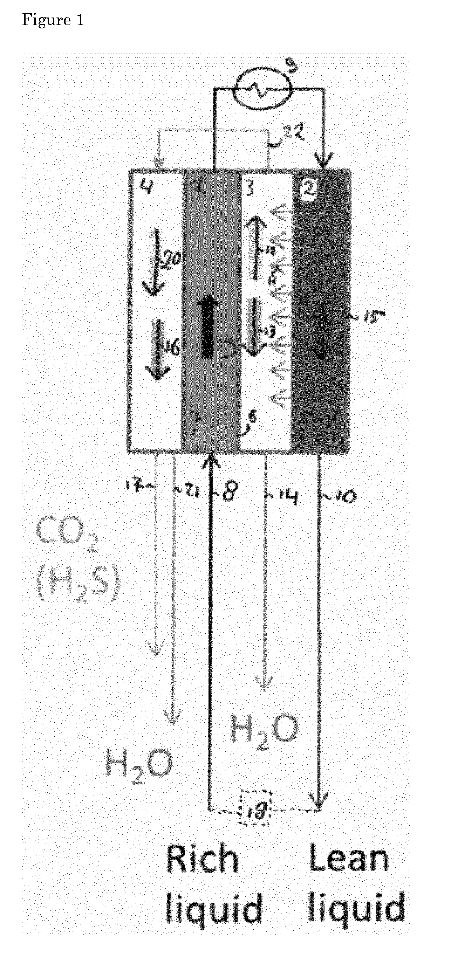

Figure 1 shows a non-limiting example of an embodiment of such a module. The module is suitable for the process as described. The module comprises a channel 1 for the rich absorption liquid 19 from feed stream 8, a channel 2 for heated rich absorption liquid 15, a channel 3 for permeate 11 and channel 4 for desorbed gas 20 and vapour 16, a membrane 5 between channel 2 and channel 3, a wall 6 between channel 1 and channel 3 and a wall 7 between channel 1 and channel 4. Channel 2 is at the retentate side of the membrane 5 and channel 3 at the permeate side of the membrane 5. Feed stream 8 comprises an aqueous absorption liquid and CO₂ (and H₂S) as absorbed gas. Feed stream 8 is relatively cold. Feed stream 8 is passed through channel 1 as rich absorption liquid stream 19 and heated at heating element 9 providing heated absorption liquid stream 15. Heated absorption liquid stream 15 is passed through channel 2 over membrane 5. In channel 2, desorption of at least part of the gas and evaporation of part of the absorption liquid occur and the gas and vapour permeate through membrane 5 as permeant 11 to channel 3. The feed stream becomes lean in absorbed gas and a stream of lean absorption liquid 10 is obtained.

Desorbed gas 12 permeated into channel 3 is passed through connection 22 to channel 4. Desorbed gas 20 passes through channel 4 and is obtained as product stream 17.

At least part of vapour 13 permeated into channel 3 condenses on wall 6 in heat exchange with channel 1, thereby heating rich absorption liquid 19 and providing condensate 14. The side of wall 6 at channel 3 can comprise a condensing surface for condensing vapour 13. Condensate 14 flows down and is obtained at an outlet of channel 3.

Part of the vapour permeated into channel 3 does not condense and is passed through connection 22 to channel 4. Part of vapour 16 in channel 4 condenses on wall 7 in heat exchange with channel 1, thereby heating rich absorption liquid 19 and providing condensate 21. The side of wall 7 at channel 4 can comprise a condensing surface for condensing vapour 16.

At the outlet of channel 4, a gas product stream 17 comprising a relatively high concentration of the gas is obtained. Condensate 21 is also obtained. Channel 4 is an optional feature; connection 22 can suitably be an outlet of the module. Gas product stream 17 is then obtained at an outlet of channel 3.

Vapour 16 is in counter-current flow with rich absorption liquid 19. Heated absorption liquid 15 is also in counter-current flow with rich absorption liquid 19. Condensate 14 is in counter-current flow with rich absorption liquid 19. Desorbed gas 12 is in counter-current flow with heated absorption liquid 15.

Feed stream 8 is optionally obtained by absorption of CO₂ (and H₂S) from a gas stream in absorption liquid comprising water in an absorption unit 18 (dashed). Lean absorption liquid stream 10 is optionally provided to absorption unit 18 (dashed connections).

The module comprises an inlet for feed stream 8 in channel 1, an outlet for lean absorption liquid 10 in channel 2, an outlet in channel 3 for condensate 14 and an outlet for gas product stream 17 in channel 4 and for condensate 21.

The membrane comprises or is suitably a flat sheet, spirally wound or tubular membrane. Preferably the membrane comprises or is a spirally wound membrane. A spirally wound membrane provides a high surface area relative to a flat sheet membrane and high heat exchange contact surface relative to a tubular membrane. Suitable flat membrane modules may be prepared as described in WO-A-2011/019278, the content of which is herewith completely incorporated by reference. Such membrane modules combine good chemical resistance, such as against desorbed gas and/or vapour, with high temperature resistance. The walls between the channels are accordingly flat sheets, spirally wound or tubular; preferably the module comprises stacked membranes and walls between the channels, wherein the walls comprise condensers. Preferably, wall 6 and membrane 5 are substantially parallel to each other, preferably the condenser and the membrane are substantially parallel to each other, in particular the condensing surface and the membrane are substantially parallel to each other.

A plurality of modules can be used in a unit. Such a unit can comprise a first and second module as described, arranged in series, wherein the first is first relative to the flow of the absorption liquid.

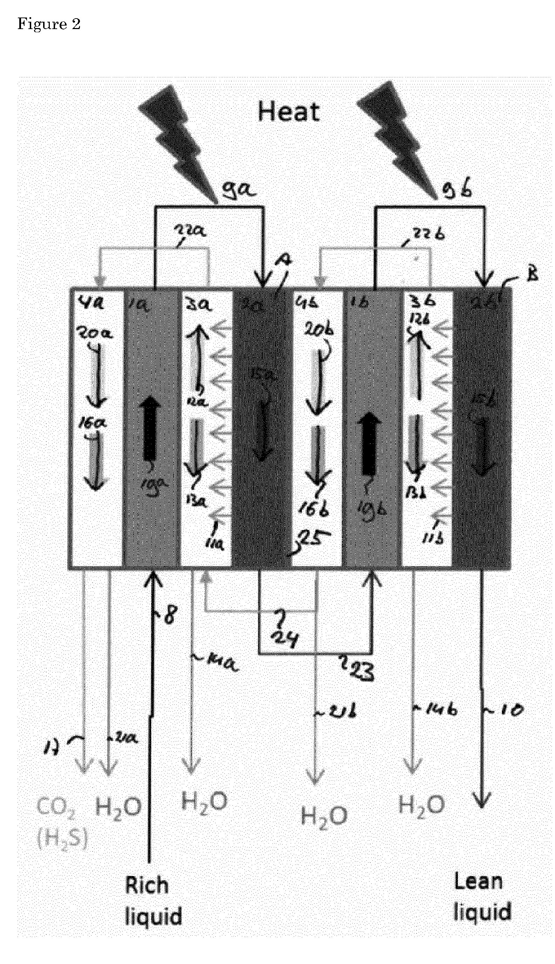

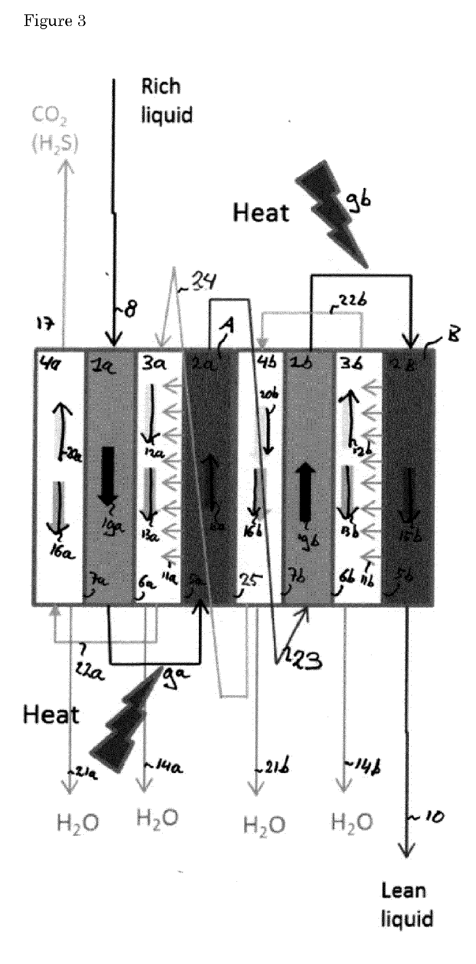

Figures 2 and 3 show non-limiting examples of embodiments of such units. Each unit comprises two modules (A, B). Modules A and B are each essentially according to Figure 1 and the elements are numbered accordingly with addition of 'a' or 'b' to indicate the module.

In figure 2, the flows in the channels of modules A and B is the same. Connection 23 connects the outlet of channel 2a to an inlet of channel 1b at the same side of the module; connection 24 connects the outlet of channel 4b to an inlet of channel 3a at the same side of the module. A wall 25 is provided between module A and B. This embodiment allows for a simple design of the connections.

In figure 3, module A and B are alternate arranged. Connection 23 for lean absorption liquid obtained in module A connects the outlet of channel 2a to the inlet of channel 1b at the opposite side of the module. Connection 24 connects the outlet of channel 4b for desorbed gas stream, possibly comprising vapour, to an inlet of channel 3a at the same side of the module. A wall 25 is provided between module A and B. This embodiment has high energy efficiency.

The unit may comprise more than two modules in series, such as 3-10 or even more.

The content of each document cited herein is herewith completely incorporated by reference, in particular WO-A-2011/019278, WO-A-2006/004400, WO-A-00/72947, and WO-A-2012/096576.

## Claims

1. Membrane gas desorption process, for desorption of a gas absorbed in an absorption liquid, comprising
(a) providing rich absorption liquid, rich in said gas,
(b) heating said rich absorption liquid,
(c) contacting heated absorption liquid with a membrane, thereby desorbing at least part of said gas and evaporating part of said absorption liquid, providing vapour, passing desorbed gas and vapour through said membrane from a retentate side to a permeate side of said membrane, providing lean absorption liquid,
(d) condensing at least part of said vapour on one or more condensers in heat exchange with the rich absorption liquid, providing a condensate, and using at least part of the heat of condensation for heating said rich absorption liquid in (b).

2. Process according to claim 1, wherein the absorption liquid at the retentate side of the membrane in step (c) and the rich absorption liquid in at least part of step (b) are in counter-current flow.

3. Process according to any one of claims 1-2, wherein the heated absorption liquid at the retentate side of the membrane and the desorbed gas at the permeate side of the membrane are in counter-current flow.

4. Process according to any one of claims 1-3,
wherein step (d) comprises condensing on two or more condensers including a first condenser at the permeate side of the membrane and a second condenser not at the permeate side of the membrane.

5. Process according to any one of claims 1-4, comprising adding at least part of the condensate to the lean absorption liquid.

6. Gas separation process for separating gasses in a mixed gas stream comprising
(a) selectively absorbing a gas from said mixed gas stream in an absorption liquid, providing rich absorption liquid,
(b) desorbing said gas at least in part from said rich absorption liquid by a membrane gas desorption process according to any one of claim 1-5.

7. Gas separation process according to claim 6, wherein said one or more gasses are CO₂ and/or H₂S.

8. Membrane gas desorption module, preferably for a process according to any one of claims 1-5, comprising
- a first channel for a rich absorption liquid, rich in absorbed gas,
- a heating element for heating said rich absorption liquid, providing heated absorption liquid,
- a second channel for the heated absorption liquid,
- a membrane between the second channel and a third channel, said membrane capable of passing through vapour and desorbed gas,
- a condenser in the third channel in heat exchange with the first channel, for condensation of vapour.

9. Module according to claim 8, further comprising a fourth channel for gas and vapour and a condenser in the fourth channel in heat exchange with the first channel, for condensation of vapour.

10. Module according to claim 8 or 9, wherein said membrane comprises a spirally wound membrane.

11. Module according to any one of claims 8-10, wherein the condenser in the third channel and the membrane are substantially parallel to each other.
